(19) Europäisches Patentamt
European Patent Office
Office européen des brevets

(11) EP 0 488 767 B1

(12) **EUROPEAN PATENT SPECIFICATION**

(45) Date of publication and mention of the grant of the patent:
**15.03.2000 Bulletin 2000/11**

(51) Int. Cl.[7]: **C08G 73/02**, D21H 21/20

(21) Application number: **91311087.0**

(22) Date of filing: **29.11.1991**

(54) **Process for making epichlorohydrin resins**

Verfahren zur Herstellung von Epichlorohydrinharzen

Procédé pour la préparation de résines à base d'épichlorohydrine

(84) Designated Contracting States:
**AT BE CH DE ES FR GB IT LI NL SE**

(30) Priority: **30.11.1990 US 619835**

(43) Date of publication of application:
**03.06.1992 Bulletin 1992/23**

(73) Proprietor:
**HERCULES INCORPORATED**
**Wilmington Delaware 19894-0001 (US)**

(72) Inventor: **Bower, Barton K.**
**Nottingham, Pennsylvania 19362 (US)**

(74) Representative:
**Jones, Alan John et al**
**CARPMAELS & RANSFORD**
**43 Bloomsbury Square**
**London, WC1A 2RA (GB)**

(56) References cited:
**EP-A- 0 320 121**
**EP-A- 0 469 891**
**US-A- 3 819 541**
**US-A- 4 336 835**
**EP-A- 0 374 938**
**DE-A- 2 833 654**
**US-A- 4 287 110**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 488 767 B1

## Description

The present invention relates to a process for making water soluble epichlorohydrin resins. In particular it relates to a process for making epichlorohydrin resins by reacting epichlorohydrin with a polyaminoamide.

Epichlorohydrin (epi) is a useful material in the manufacture of a wide range of chemicals and polymers in aqueous media. Synthetic water-soluble epichlorohydrin resins, such as polyaminoamide-epichlorohydrin wet-strength resins, are used, for example, in manufacturing paper. Procedures for making polyaminoamide-epichlorohydrin resins are well known. In order to maximize useful functionality in the final product, these processes involved reacting aqueous polyamine with an excess of epichlorohydrin in order to cause complete conversion of amine to epichlorohydrin adducts.

Such manufacturing processes result in the formation of undesirable byproducts such as 1,3-dichloro-2-propanol (DCP) and 1-chloro-2,3-propanediol (CPD). Accordingly, it would be advantageous to have a process effecting reduced levels of unwanted byproducts such as 1,3-dichloro-2-propanol and 1-chloro-2,3-propanediol while still resulting in desired products having acceptable functionality levels.

EPA 0 374 938 discloses a process for producing an aqueous solution of a cationic thermosetting resin containing a very small amount of organic halogen compounds, which comprises the steps of:

(i) heating an aliphatic dicarboxylic acid and a polyalkylenepolyamine in a molar ratio of the aliphatic-dicarboxylic acid to the polyalkylenepolyamine of 1:1.0 to 1:1.2 until the viscosity at 25°C of a 50% aqueous solution of the resulting polyamidopolyamine reaches 400 to 1000 cps to obtain a polyamidopolyamine;
(ii) reacting the polyamidopolyamine with epihalohydrin in an aqeuous medium at a temperature from 10 to 55°C under such conditions that the amount of epihalohydrin is from 0.85 to 1.40 moles per mole of secondary amino group present in the polyamidopolyamine when the reaction temperature is from 10 to 45°C or from 0.85 to 1.25 moles per mole of said secondary amino group when the reaction temperature is from 45 to 55°C, the total concentration of said reactants in the aqueous medium being 20 to 70% by weight until the total amount of unreacted epichlorohydrin and other organic halogen compound does not change substantially;
(iii) maintaining or lowering the concentration of the resulting aqeuous solution of the reaction product;
(iv) keeping the temperature of the aqueous solution from 25 to 70°C until the viscosity at 25°C of the aqueous solution at a concentration of 15% reaches 10 to 100 cps; and
(v) adjusting pH of the resulting aqueous solution of the product to 3 to 5 at 25°C.

European Patent Application No. EP-A-0469891 (91307024.9) discloses a method for synthesizing water soluble polyaminopolyamide-epichlorohydrin resins comprising: (a) reacting an aqueous solution of a polyaminopolyamide resin having a concentration of about 13.5% to 70% with from about 0.05 to 1.5 molar equivalents of epichlorohydrin based on the secondary amine nitrogen content of the polyaminopolyamide resin at a temperature not exceeding 60°C until about 70% to 100% of the total charge of epichlorohydrin has reacted; (b) adding from about 0.1% to 30% of one molar equivalent first divided by the number of acidic hydrogen atoms per molecule of a halogen-free mineral acid based on the original secondary amine nitrogen content of the polyaminopolyamide resin at a temperature of from about 20°C to 100°C; and (c) continuing the reaction at a temperature of about 20°C to 100°C to effect at least a 10% reduction in the polymer bound organochlorine concentration, based on the composition of the reaction mixture at the time of the acid addition.

EP-A-0320121 discloses stabilisation of an aqueous polyamide-epichlorohydrin resin by addition of a combination of weak and strong acids.

U.S. Patent 3,819,541 discloses preparation of a polypropanolamine-epichlorohydrin resin.

U.S. Patents 4,287,110 and 4,336,835 disclose preparation of a polyalkylenepolyamine-epichlorohydrin resin using epichlorohydrin in an amount of 1.6 to 1.7 moles per mole of the polyamide secondary amine.

Accordingly, the present invention provides an improvement in a process for producing a cationic, water-soluble polyaminoamide/epichlorohydrin resin comprising reacting epichlorohydrin with a polyaminoamide solution, the improvement comprising (a) reacting to $C_3$ to $C_{12}$ dicarboxylic acid or dicarboxylic acid derivative with a polyalkylene polyamine containing at least one secondary amine group in a mole ratio of dibasic acid to polyalkylene polyamine of from 1.025 to 1.1 to obtain a polyaminoamide, (b) reacting the epichlorohydrin with the polyaminoamide in a mixture first at a temperature of 25- less than 40°C and then (c) continuing the reaction at 25-85°C. According to the present invention (i) a solution comprising by weight 30-100% polyaminoamide and 0-70% water is reacted with (ii) epichlorohydrin at a molar ratio of epichlorohydrin to amine groups in the polyaminoamide of 0.8-0.95. With the process of the present invention provides an intermediate polyaminochlorohydrin having at least 60% aminochlorohydrin functionality,and a water-soluble epichlorohydrin resin at a pH of 2.5-3.5 is prepared.

In the polyaminochlorohydrin intermediate, the molar ratio of aminochlorohydrin groups to amine groups in the initial polyaminoamide should be more than the molar ratio of epichlorohydrin to amine groups in the initial polyaminoamide minus 0.05 and preferably, it should be more than such molar epi:amine ratio minus 0.01.

In the process of the present invention, a polyaminoamide having secondary amine functionality of the formula

-(R-NH-R)-

wherein R and R is the polymeric backbone, is reacted with epichlorohydrin

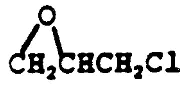

to form an intermediate polyaminochlorohydrin

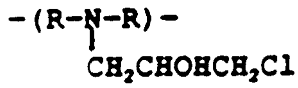

wherein R and R are as defined hereinabove. The temperature at which the reaction is conducted is maintained at 25- less than 40°C, preferably 25-35°C, more preferably initially at 30°C, then after the addition of epichlorohydrin slowly raised to 35°C for the remainder of the reaction. As used in the present invention polyamines are polyaminoamides disclosed in U.S. Pat. Nos. 2,926,116 and 2,926,154. Such materials are made by condensing a dicarboxylic acid derivative with a polyalkylenepolyamine, which is defined in US Patents 2,926,116 and 2,926,154 as containing two primary amino groups. The acid residues can be aliphatic, aromatic, or aralkyl, and can contain between 3 and 12 carbon atoms. The aliphatic acid residues can be linear or cyclic. Preferred acid residues are adipoyl and glutaroyl. The polyalkylenepolyamine residues generally contain at least one secondary amino group and can be tri-, tetra-, penta-, or higher amines, and can also contain other functionality. The amino groups in the polyalkylenepolyamine can be connected by aliphatic residues such as ethylene or trimethylene groups, or aromatic residues such as phenylene, aralkyl residues such as xylyl.

The temperatures employed for carrying out the reaction between the dibasic acid and the polyalkylene polyamine may vary from 110°C to 250°C or higher at atmospheric pressure. For most purposes, however, temperatures between 160°C and 210°C have been found satisfactory and are preferred. Where reduced pressures are employed, somewhat lower temperatures may be utilized. The time of reaction depends on the temperatures and pressures utilized and will ordinarily vary from about 1/2 to 2 hours, although shorter or longer reaction times may be utilized depending on reaction conditions. In any event, the reaction is desirably continued to substantial completion for best results.

In carrying out the reaction, it is preferred to use an amount of dibasic acid sufficient to react substantially completely with the primary amine groups of the polyalkylene polyamine but insufficient to react with the secondary amine groups to any substantial extent. The molar ratio of dibasic acid to polyaminoamide residue is 1.025-1.1.

The reaction temperatures of 25- less than 40°C are used to help prevent the reaction of chloride ion with epichlorohydrin to form 1,3-dichloro-2-propanol and the reaction of epichlorohydrin with water to form 1-chloro-2,3-propanediol.

In order to prevent the formation of azetidinium chloride and to prevent the reaction of chloride ion with epi to form DCP, the temperature of the reaction mixture should be as low as possible. However, low temperatures such as below 25°C,tend to cause problems of inconveniently long reaction times, high viscosity, poor mixing and heat removal. We have discovered that 25- less than 40°C and 25-35°C is most advantageous.

The reaction is carried out such that the molar ratio of epichlorohydrin to the amine groups in the polyaminoamide is 0.8-0.95. By using an equimolar ratio or less there is little or no epichlorohydrin remaining after the reaction is complete to form unwanted byproducts.

The polyaminoamide is reacted with epichlorohydrin in a solution of by weight 0-70% of water and 30-100% of polyaminoamide, preferably 30-60% water and 40-70% of polyaminoamide.

At an epi/amine mole ratio range of 0.80-0.95, the range of 30-100% of polyaminoamide corresponds to reaction solids range of about 37-100%, and the range of 40-70% of polyaminoamide corresponds to about 47-77% of reaction solids.

Reaction solids are calculated as follows:

$$\text{Reaction Solids} = \frac{1 + c}{c + 100/\%\ \text{PAAS}}$$

where

$$c = \frac{92.53}{213.28} \text{ x (epi/amine ratio)}$$

and PAAS is the polyaminoamide solids

By controlling the amount of water between these limits it has been discovered that the formation of 1-chloro-2,3-propanediol by the reaction of epichlorohydrin with water is even further limited. Reaction time varies depending on the temperature, with lower temperatures taking longer times. In order to facilitate the reaction of the epi with amine, and in order to discourage the reaction of epi with water to form CPD, the concentration of epi and amine in the reaction mixture should be as high as possible. However, the mixing and heat removal capabilities of available equipment may impose limitations on reactant concentrations. Generally, reaction times vary between 1 and 19 hours, preferably between 3 and 6 hours. Because the reaction is exothermic, the epichlorohydrin is added slowly over time to the polyaminoamide to allow for more effective heat transfer from the reaction medium. Heat transfer from the reaction medium can be accomplished according to known procedures, such as immersing the reaction vessel in a refrigerated environment, e.g., an ice bath, or passing refrigerated coils inside the reaction vessel. Preferably, reaction conditions are adjusted so that, based on a final polyaminoamide-epichlorohydrin product having a total solids content of 12.5 weight%, the amount of 1,3-dichloro-2-propanol in the product is less than 2000 ppm, more preferably less than 1000 ppm, and the amount of 1-chloro-2,3-propanediol in the product is less than 600 ppm, more preferably less than 300 ppm.

At the ratios and solids content described hereinabove, the polyaminochlorohydrin intermediate has an aminochlorohydrin functionality of at least 60%. Preferably, at least 70% of the number of secondary amine groups of the polyaminoamide are converted to aminochlorohydrin groups. More preferably, the aminochlorohydrin functionality is about 80-95%. It will be recognized that the number of amine groups converted is limited by the ratio of epichlorohydrin to amine groups. For example, for a ratio of 0.8, the maximum possible conversion of secondary amine groups is 80%. The temperatures of 25- less than 40°C used also result in relatively little isomerization of the aminochlorohydrin groups formed to 3-hydroxyazotidinium groups. Preferably, the 3-hydroxyazetidinium functionality, i.e., the number of amine groups in the polyaminoamide converted to 3-hydroxyazetidinium groups, in the polyaminochlorohydrin intermediate is less than 20%, more preferably less than 10%, most preferably 2-5%.

After the epichlorohydrin is reacted, in a second stage the reaction mixture is heated to a temperature of 25-85°C, preferably 45-65°C. Heating times vary depending on the temperature used, with higher temperatures resulting in shorter times. Generally, the heating time varies between 1 hour and 7 days. Lower heating temperatures result in lower amounts of 1,3-dichloro-2-propanol and 1-chloro-2,3-propanediol in the final product. The second stage causes isomerization of some of the aminochlorohydrin groups on the polyaminochlorohydrin to 3-hydroxyazetidinium chloride groups and cross-links other aminochlorohydrin groups to form the final polyaminoamide-epichlorohydrin resin. Resin formation is detectable by increases in viscosity and the reaction proceeds until the desired viscosity level is achieved, but before the material cures to a water-insoluble material. The desired viscosity level is chosen so as to result in a final product having a Brookfield viscosity of 40-60 mPa.s (centipoise) based on a total solids content of 12.5 weight%. Generally, the desired viscosity at which heating is discontinued (i.e., the second stage of the reaction halted) is at least C or higher on the Gardner-Holdt scale, depending upon the solids concentration of the reaction mixture, with higher solids concentrations resulting in higher values on the Gardner-Holdt scale. Preferably, the second stage is halted at a Gardner-Holdt viscosity of J when the solids content of the reaction mixture is 20 weight%, at a Gardner-Holdt viscosity of M when the solids content is 25 weight%, and at a Gardner-Holdt viscosity of T when the solids content is 30 weight%.

When the desired viscosity is reached, water is preferably added to adjust the solids content to the desired level, and then stabilized by adding sufficient acid to reduce the pH to 2.5-3.5. Suitable acids include hydrochloric acid, sulfuric acid, nitric acid, formic acid, phosphoric acid, and acetic acid. At a pH greater than 3.5 the material begins to cure to a water-insoluble rubber, while at a pH less than 2.5 the material begins to decompose.

The polyaminoamide-epichlorohydrin resins of the present invention are useful as wet strength agents for paper materials, such as paper towels, absorbent tissue, wrapping paper, and bag paper. Preformed or partially dried paper can be impregnated by immersion in the resin or by spraying the resin on the paper, following which the paper can be heated for 0.5-30 minutes at temperatures of 90°C or higher to fully cure the thermosetting resin to a water-insoluble material.

The resin is incorporated in paper at preferred amounts of 0.1-5% by dry weight of the paper. Quantities of resin added to aqueous paper stock will depend on the degree of wet strength desired in the finished product and on the amount of resin retained by the paper fibers.

To more clearly describe the present invention, the following non-limiting examples are provided. In the examples parts and percentages are by weight unless indicated otherwise.

EXAMPLE 1 (Comparative)

A polyaminoamide is prepared according to the following procedure. About 1068 parts diethylenetriamine and 514 parts water are heated in a kettle equipped with an agitator. The agitator is started and about 1550 parts of adipic acid are added at a rate of about 100 parts per minute (mole ratio of acid to amine is 1.025). After the acid is added, the temperature of the mixture is raised to about 190-195°C, and maintained at that temperature for about 90 minutes. The mixture is then cooled to about 170°C, and about 2400 parts of water are slowly added. The product is cooled to about 25°C and has a polyaminoamide solids content of about 53.7%.

In the first stage of the process, a 50% solids homogeneous solution of the polyaminoamide (0.528 moles) is stirred at 120 rpm in a reaction kettle immersed in a thermostat bath maintained at 30°C ($T^1$). Epichlorohydrin (99%, 0.528 moles, available from Aldrich Chemical Company) is added over a two-hour period, and the reaction stirred for an additional 4 hours at 30°C ($P^1$ = 5 hours). In the second stage of the process, the resulting 59% solids solution of polyaminochlorohydrin intermediate is transferred to a round-bottom flask, diluted to 30% solids with water, stirred at about 380 rpm, and heated at about 65°C ($T^2$). Over a two-hour period as the Gardner-Holdt viscosity of 25°C aliquots advanced to T, the temperature of the reaction mixture is decreased to about 50°C. Heating is discontinued at the Gardner-Holdt viscosity of T and the mixture allowed to cool.

Sulfuric acid (98%) is added along with potassium sorbate fungicide and water to obtain a pH of 3.0 at a solids content (by oven evaporation) of 13.4% and a Brookfield viscosity (V.) of 43.2 mPa.s (centipoise (cP)).

EXAMPLE 2 (Comparative)

Polyaminoamide and polyaminochlorohydrins are made following the procedure of Example 1 except as modified as shown in the following Table 1. The final resin product is prepared following the procedures for stage 2 of Example 1, and the solids content, 1,3-dichloro-2-propanol (DCP) content, and Brookfield viscosity determined and also reported in Table 1. In stage 2, $T^2$ is discontinued when a suitable Gardner-Holdt viscosity is reached in order to obtain in the final product a Brookfield viscosity of about 50 mPa.s (cP), based on a 12.5 weight% solids content in the final product.

Table 1

| Example | PAA | epi/PAA | $T^1$ | $P^1$ | $T^2$ | DCD(ppm) | V. (mPa.s) (cP) |
|---|---|---|---|---|---|---|---|
| 2 (Comp<-> arative | 50% | 0.7 | 25°C | 6 hr | 60°C | 27 | 53.8 |
| 3 | 50% | 0.8 | 25°C | 3 hr | 70°C | 131 | 51.1 |
| 4 | 50% | 0.8 | 25°C | 6 hr | 60°C | 123 | 8.8 |
| 5 | 50% | 0.8 | 25°C | 7 hr | 60°C | 200 | 19.1 |
| 6 | 50% | 0.9 | 25°C | 3 hr | 65°C | 950 | 47.6 |
| 7 | 50% | 0.9 | 25°C | 6 hr | 60°C | 640 | 41.6 |
| 8 | 50% | 0.9 | 30°C | 3 hr | 65°C | 767 | 60.6 |
| 9 | 50% | 0.9 | 25°C | 6 hr | 65°C | 833 | 52.4 |
| 10 (Comparative) | 50% | 1.0 | 25°C | 3 hr | 70°C | 2622 | 44.5 |
| 11 (Comparative) | 50% | 1.0 | 30°C | 3 hr | 65°C | 2673 | 49.2 |
| 12 | 60% | 0.8 | 25°C | 7 hr | 60°C | 200 | 9.5 |
| 13 | 60% | 0.8 | 30°C | 7 hr | 70°C | 81 | 48.4 |
| 14 | 70% | 0.8 | 25°C | 7 hr | 70°C | 600 | 295.0 |
| 15 | 70% | 0.8 | 30°C | 7 hr | 60°C | 270 | 269.5 |
| 16 | 50% | 0.9 | 35°C | 3 hr | 25°C | 844 | 32.9 |

Some of the resins are tested for wet-strength characteristics in paper. To three 70:30 mixtures of Weyerhauser bleached hardwood kraft and Rayonier bleached kraft pulps maintained at a water hardness of 100 ppm, a 50 ppm alkalinity, and a pH of 7.6, amounts of 0.25%, 0.5%, and 1% of the resin based on pulp are added. For comparison, paper was also prepared having no wet-strength additive.

Paper made has the basis weight of 18 kg/ream (40 lbs/ream). A press having 804 kg/m (45 lbs/linear inch) or pressure is used in the papermaking. The paper is dried to four percent moisture on seven driers at 150-190°F. Oven curing is carried out at 80°C for 0.5 hr. Wet tensile tests are performed on 152 mm (six-inch) span, 13 mm (0.5 inch) strips at the rate of 51 mm (two inches) per minute. Wet tensile strengths (WT) measured are nominalized to the basis weight of 18 kg/ream (40 lbs/ream). Results from papers treated at dosage (D) of the levels 0.25%, 0.5%, and 1.0% as described hereinabove are least-squares fitted by adjusting constants in the equation

$$1/WT = a/D + b$$

and the results are interpolated to 0.5% vs. pulp. The values obtained are reported in the following Table 2.

Table 2

| Example | Wet Tensile Strength (lbs/in) kg/m |
|---|---|
| 3 | (3.96) 70.7 |
| 4 | (4.74) 84.6 |
| 5 | (3.96) 70.7 |
| 6 | (6.11) 109.1 |
| 7 | (5.78) 103.2 |
| 8 | (6.23) 111.3 |
| 9 | (6.02) 107.5 |
| 10 (Comparative) | (6.08) 108.6 |
| 11 (Comparative) | (6.01) 107.3 |
| 12 | (3.76) 67.1 |
| Comparative example | (0.67) 12.0 |

## Claims

**1.** A process for producing a water-soluble epichlorohydrin resin comprising, (a) reacting a $C_3$ to $C_{12}$ dicarboxylic acid or dicarboxylic acid derivative with a polyalkylene polyamine containing at least one secondary amine group in a mole ratio of dibasic acid to polyalkylene polyamine of from 1.025 to 1.1 to obtain a polyaminoamide, (b) reacting the polyaminoamide with epichlorohydrin in a solution of by weight 0-70% of water and 30-100% of the polyaminoamide first at a temperature of from 25°C to less than 40°C and then (c) continuing the reaction at 25-85°C, wherein the molar ratio of epichlorohydrin to amine groups in the polyaminoamide is 0.8-0.95 and wherein a halogen free mineral acid is not added to the mixture in step (b) or (c).

**2.** A process of claim 1 wherein step (b) is performed at a temperature of 25-35°C.

**3.** A process of claim 1 wherein the solution comprises by weight 50-80% of polyaminoamide and 20-50% of water.

**4.** A process according to any preceding claim wherein step (b) is performed at a temperature of 25-35°C and wherein in the reaction of the epichlorohydrin with the polyaminoamide there is formed an intermediate polyaminochlorohydrin in which the molar ratio of aminochlorohydrin groups to amine groups in the polyaminoamide is more than the molar ratio of epichlorohydrin to amine groups in the polyaminoamide minus 0.05.

**5.** A process according to any preceding claims wherein the polyaminoamide solution comprises by weight 50-80% of polyaminoamide and 20-50% water, and wherein in the reaction of the epichlorohydrin with the polyaminoamide

there is formed an intermediate polyaminochlorohydrin in which the molar ratio of aminochlorohydrin groups to amine groups in the polyaminoamide is more than the molar ratio of epichlorohydrin to amine groups in the polyaminoamide minus 0.01.

**6.** A process according to any preceding claim wherein step (c) is performed at a temperature of 45-65°C.

**Patentansprüche**

**1.** Verfahren zur Herstellung eines wasserlöslichen Epichlorhydrinharzes, umfassend (a) Umsetzen einer/eines $C_{3-12}$-Dicarbonsäure oder -Dicarbonsäure-Derivats mit einem Polyalkylenpolyamin, das wenigstens eine sekundäre Amin-Gruppe enthält, in einem Molverhältnis von zweibasiger Säure zu Polyalkylenpolyamin von 1,025 bis 1,1, um ein Polyaminoamid zu erhalten, (b) Umsetzen des Polyaminoamids mit dem Epichlorhydrin in einer Lösung aus 0 bis 70 Gew.-% Wasser und 30 bis 100 Gew.-% des Polyaminoamids zuerst bei einer Temperatur von 25 bis weniger als 40°C und anschließend (c) Fortsetzen der Reaktion bei 25 bis 85°C, worin das Molverhältnis von Epichlorhydrin zu Amin-Gruppen im Polyaminoamid 0,8 bis 0,95 ist und worin eine halogenfreie Mineralsäure nicht zur Mischung in Schritt (b) oder (c) hinzugegeben wird.

**2.** Verfahren gemäß Anspruch 1, worin Schritt (b) bei einer Temperatur von 25 bis 35°C durchgeführt wird.

**3.** Verfahren gemäß Anspruch 1, worin die Lösung 50 bis 80 Gew.-% Polyaminoamid und 20 bis 50 Gew.-% Wasser umfaßt.

**4.** Verfahren gemäß einem der vorhergehenden Ansprüche, worin Schritt (b) bei einer Temperatur von 25 bis 35°C durchgeführt wird und worin in der Reaktion des Epichlorhydrins mit dem Polyaminoamid ein intermediäres Polyaminochlorhydrin gebildet wird, in dem das Molverhältnis von Aminochlorhydrin-Gruppen zu Amin-Gruppen im Polyaminoamid mehr als das Molverhältnis von Epichlorhydrin zu Amin-Gruppen im Polyaminoamid minus 0,05 ist.

**5.** Verfahren gemäß einem der vorhergehenden Ansprüche, worin die Polyaminoamid-Lösung 50 bis 80 Gew.-% Polyaminoamid und 20 bis 50 Gew.-% Wasser umfaßt und worin in der Reaktion des Epichlorhydrins mit dem Polyaminoamid ein intermediäres Polyaminochlorhydrin gebildet wird, in dem das Molverhältnis von Aminochlorhydrin-Gruppen zu Amin-Gruppen im Polyaminoamid mehr als das Molverhältnis von Epichlorhydrin zu Amin-Gruppen im Polyaminoamid minus 0,01 ist.

**6.** Verfahren gemäß einem der vorhergehenden Ansprüche, worin Schritt (c) bei einer Temperatur von 45 bis 65°C durchgeführt wird.

**Revendications**

**1.** Procédé pour la production d'une résine d'épichlorhydrine hydrosoluble, comprenant (a) la réaction d'un acide dicarboxylique ou dérivé d'acide dicarboxylique en $C_3$ à $C_{12}$ avec une polyalkylènepolyamine contenant au moins un groupe amine secondaire en un rapport molaire du diacide à la polyalkylènepolyamine de 1,025 à 1,1 pour obtenir un polyaminoamide, (b) la réaction du polyaminoamide avec l'épichlorhydrine dans une solution de 0 à 70 % en poids d'eau et 30 à 100 % en poids du polyaminoamide tout d'abord à une température comprise dans l'intervalle de 25°C à moins de 40°C, puis (c) la poursuite de la réaction à une température comprise dans l'intervalle de 25 à 85°C, dans lequel le rapport molaire de l'épichlorhydrine aux groupes amine dans le polyaminoamide va de 0,8 à 0,95 et dans lequel un acide minéral non halogéné n'est pas ajouté au mélange dans l'étape (b) ou (c).

**2.** Procédé suivant la revendication 1, dans lequel l'étape (b) est mise en oeuvre à une température comprise dans l'intervalle de 25 à 35°C.

**3.** Procédé suivant la revendication 1, dans lequel la solution comprend 50 à 80 % en poids de polyaminoamide et 20 à 50 % en poids d'eau.

**4.** Procédé suivant l'une quelconque des revendications précédentes, dans lequel l'étape (b) est mise en oeuvre à une température comprise dans l'intervalle de 25 à 35°C et, dans la réaction de l'épichlorhydrine avec le polyaminoamide, il est formé un intermédiaire polyaminochlorhydrine, le rapport molaire des groupes aminochlorhydrine aux groupes amine dans le polyaminoamide étant supérieur au rapport molaire de l'épichlorhydrine aux groupes amine dans le polyaminoamide moins 0,05.

5. Procédé suivant l'une quelconque des revendications précédentes, dans lequel la solution de polyaminoamide comprend 50 à 80 % en poids de polyaminoamide et 20 à 50 % en poids d'eau et, dans la réaction de l'épichlorhydrine avec le polyaminoamide, il est formé un intermédiaire polyaminochlorhydrine, le rapport molaire des groupes aminochlorhydrine aux groupes amine dans le polyaminoamide est supérieur au rapport molaire de l'épichlorhydrine aux groupes amine dans le polyaminoamide moins 0,01.

6. Procédé suivant l'une quelconque des revendications précédentes, dans lequel l'étape (c) est mise en oeuvre à une température comprise dans l'intervalle de 45 à 65°C.